# EUROPÄISCHE PATENTSCHRIFT

(11) **EP 2 977 844 B1**
(45) Veröffentlichungstag und Bekanntmachung des Hinweises auf die Patenterteilung: **18.10.2017**
(21) Anmeldenummer: 15174957.9
(22) Anmeldetag: 02.07.2015
(51) Int. Cl.: G05D 1/02, G05D 1/00

(54) **VERFAHREN ZUR REINIGUNG ODER BEARBEITUNG EINES RAUMES MITTELS EINES SELBSTTÄTIG VERFAHRBAREN GERÄTES**
METHOD FOR CLEANING OR PROCESSING A ROOM USING AN AUTOMATICALLY MOVED DEVICE
PROCEDE DE NETTOYAGE OU DE TRAITEMENT D'UNE PIECE A L'AIDE D'UN APPAREIL AUTOMOBILE

(30) Priorität: 22.07.2014 DE 102014110265
(43) Veröffentlichungstag der Anmeldung: 27.01.2016
(73) Patentinhaber: Vorwerk & Co. Interholding GmbH, 42275 Wuppertal (DE)
(72) Erfinder: Hillen, Lorenz, 42287 Wuppertal (DE); Meggle, Martin, 33442 Herzebrock (DE); Scheffel, Jenny, 51105 Köln (DE)
(74) Vertreter: Müller, Enno

(56) Entgegenhaltungen:
- EP-A2- 2 725 443
- WO-A1-2013/085085
- WO-A2-2012/008702
- WO-A2-2012/157951
- US-A1- 2002 153 184
- US-A1- 2013 024 025

## Beschreibung

Die Erfindung betrifft zunächst ein Verfahren zur Reinigung oder Bearbeitung eines Raumes mittels eines selbsttätig verfahrbaren Gerätes nach den Merkmalen des Oberbegriffes des Anspruches 1.

Die Erfindung betrifft weiter ein selbsttätig verfahrbares Gerät nach den Merkmalen des Oberbegriffes des Anspruches 9.

Verfahren der vorgenannten Art sind im Stand der Technik hinreichend bekannt. Das zur Reinigung oder Bearbeitung eines Raumes verwendete Gerät verfährt selbsttätig nach einer vorprogrammierten Fahr- und gegebenenfalls Reinigungs-/Bearbeitungsstrategie. In diesem Zusammenhang ist es auch bekannt, dass das Gerät über eine Karte oder kartenartige Darstellung des zu reinigenden oder zu bearbeitenden Raumes, gegebenenfalls über mehrere Karten für entsprechend mehrere Räume, verfügt. Diese Karte ist bevorzugt in einem nicht flüchtigen Datenspeicher abgelegt. In der Karte oder kartenartigen Darstellung des Raumes sind insbesondere die Ortsdaten von Hindernissen, beispielsweise Begrenzungswänden oder auch Möbeln, markiert. Zur Erfassung des Raumes ist es weiter bekannt, das Gerät im Rahmen einer Lernfahrt zu verfahren, in deren Rahmen die Karte erstellt wird. Zusätzlich kann die Karte auch im Zuge nachfolgender Fahrten aktualisiert werden, um beispielsweise neu angeordnete Möbel zu erfassen. Dazu verfügt das Gerät über Mittel zur Erfassung des Raumes, die die Ortsdaten des Raumes, insbesondere der Hindernisse, erkennen können. Diesbezüglich wird auf die DE 102008014912 A1 verwiesen, welche ein Reinigungsgerät mit einem Rundum-Scanner zeigt. Die dargestellte Hinderniserkennung basiert im Einzelnen auf einem optischen Triangulationsverfahren, welches Entfernungen zu Hindernissen misst, nach welchen eine Karte des Raumes erstellt werden kann. Ein Verfahren zur Erstellung einer Karte mit Ortsinformationen offenbart beispielsweise die DE 102010000174 A1.

Alternativ oder zusätzlich zu den Abstandsmessungen ist es im Stand der Technik auch bekannt, Karten beispielsweise aus mosaikartig zusammengesetzten Einzelbildern zu erstellen, die mittels einer Kamera aufgenommen wurden.

Um ein im Stand der Technik bekanntes Gerät darüber hinaus zu einem bestimmten Teilbereich des Raumes zu lenken, beispielsweise um dort lokal begrenzt eine Reinigung/Bearbeitung durchzuführen, oder zu veranlassen, diesen Bereich bei der Reinigung/Bearbeitung ganz auszusparen, sind im Stand der Technik Verfahren bekannt, bei welchen der Nutzer das Gerät mit Hilfe einer Fernbedienung manuell zu einem gewünschten Teilbereich lenken kann oder einen gewünschten Teilbereich innerhalb der Karte als Zielort auswählt. In Bezug auf die lokal begrenzte Reinigung (Spotreinigung) kann der Nutzer beispielsweise das Gerät mittels einer Fernbedienung an die zu reinigende Stelle lenken, beispielsweise über Pfeiltasten. Alternativ kann der Nutzer das Gerät jedoch auch an die gewünschte Stelle tragen und dort eine Taste am Gerät drücken, um die lokale Reinigung zu initiieren. Um dem Gerät demgegenüber anzuzeigen, welche lokalen Teilbereiche nicht befahren werden sollen, werden beispielsweise separate "Absperrmarker" gesetzt, wie zum Beispiel Magnetbänder oder IR-Baken.

Darüber hinaus sind auch Verfahren bekannt, bei welchen ein Nutzer ein mobiles Endgerät, beispielsweise ein Smartphone nutzt, um das Gerät fernzusteuern. Dabei kann eine aktuell mittels einer Kamera des Reinigungs- oder Bearbeitungsgerätes von dem Raum erstellte Aufnahme und/ oder eine in einem Datenspeicher des Gerätes hinterlegte Karte auf dem mobilen Endgerät angezeigt werden. Der Nutzer kann zu reinigende/ zu bearbeitende oder auch zu meidende Teilbereiche des Raumes auswählen und/ oder markieren. Im Falle einer gewünschten lokalen Reinigung kann das Gerät den Teilbereich beispielsweise selbsttätig anfahren, ohne dass der Nutzer die Bewegung überwachen oder steuern muss. Diesbezüglich wird beispielsweise auf die Druckschriften DE 102009024990 A1 und DE 102009052629 A1 verwiesen.

Nachteilig bei den vorgenannten Verfahren ist, dass der Nutzer den anzufahrenden/ zu meidenden Teilbereich des Raumes innerhalb der Karte selbst auffinden muss. Dazu muss der Nutzer das Gerät beispielsweise mittels Pfeiltasten einer Fernbedienung, beispielsweise auch einem mobilen Endgerät, zu dem gewünschten Teilbereich steuern. Dies ist häufig unpräzise, so dass zu einer genauen Anfahrt des gewünschten Teilbereiches Korrekturen nötig sind oder der Nutzer besonders geübt sein muss. Dabei fährt das Gerät den Teilbereich des Raumes nicht selbsttätig an, sondern der Nutzer muss das Gerät so lange steuern bis der gewünschte Teilbereich des Raumes erreicht ist. Bei der Anzeige von Bildern der Gerätekamera oder der Darstellung einer Karte des Raumes auf einem mobilen Endgerät muss der Nutzer ebenfalls den gewünschten Teilbereich selbst innerhalb der Karte auffinden und auswählen. Dabei muss der Nutzer sich stets selbst innerhalb der Karte orientieren und den gewünschten Teilbereich auffinden. Dies ist, insbesondere bei nicht geübten Nutzern, zeitaufwendig und unkomfortabel.

Aus der WO 2013/085085 A1 ist es bekannt, im Zusammenhang mit einem selbsttätig verfahrbaren Gerät zur Reinigung oder Bearbeitung eines Raumes ein Foto eines Teilbereiches zu erstellen und nutzerseitig diesen auszuwählen und die Reinigung unter Berücksichtigung dieser Auswahl vorzunehmen. Hinsichtlich möglicher Unstimmigkeiten in dem Foto ist aber keine weitere Möglichkeit gegeben. Darüber hinaus ist auch auf den Stand der Technik gemäß der WO 2012/008702 A2, EP 2 725 443 A2 und US 2002/153184 A1 zu verweisen.

Ausgehend von dem zuletzt genannten Stand der Technik beschäftigt sich die Erfindung mit der Aufgabenstellung, ein Verfahren und eine Vorrichtung zur Reinigung oder Bearbeitung eines Raumes mittels eines selbsttätig verfahrbaren Gerätes anzugeben, bei welchem im Hinblick auf eine Auswahl eines zu reinigenden Teilbereiches über ein Foto eine möglichst praxisgerechte Ausgestaltung geben ist.

Diese Aufgabe ist gemäß der Lehre des Anspruches 1 dadurch gelöst, dass der Nutzer bei nicht eindeutiger Identifikation des Teilbereiches manuell eine Auswahl zwischen mehreren möglichen Teilbereichen trifft und/ oder die Ortsdaten des ausgewählten Teilbereiches konkretisiert.

Diese Aufgabe ist hinsichtlich des selbsttätig verfahrbaren Gerätes bei dem Gegenstand des Anspruches 9 gelöst, wobei darauf abgestellt ist, dass das Gerät so eingerichtet ist, dass es dem Nutzer ermöglicht ist, bei nicht eindeutiger Identifikation des Teilbereiches manuell eine Auswahl zwischen mehreren möglichen Teilbereichen zu treffen und/ oder die Ortsdaten des ausgewählten Teilbereiches zu konkretisieren.

Bei einem Vergleich der Ortsdaten der ausgewählten Teilbereiche mit den Ortsdaten der Karte wird idealerweise nur ein einziger identischer oder möglichst ähnlicher Teilbereich innerhalb der Karte ermittelt. Es kommt jedoch auch vor, dass der von dem Nutzer ausgewählte Teilbereich nicht eindeutig in der Karte ermittelt werden kann. In diesem Fall werden dem Nutzer mehrere mögliche Teilbereiche zur Auswahl gestellt, die mehr oder weniger auf seinen ausgewählten Teilbereich passen. Der Nutzer kann zwischen diesen verschiedenen vorgeschlagenen Teilbereichen auswählen oder alternativ die Ortsdaten weiter konkretisieren, beispielsweise genauere Angaben über Ausdehnung und Lage des zu reinigenden Teilbereiches beziehungsweise des zu meidenden Teilbereiches machen. Dazu wird die Karte dem Nutzer vorteilhaft beispielsweise auf dessen mobilem Endgerät dargestellt. Die Darstellung kann verschiebbar, drehbar, vergrößerbar, verkleinerbar oder ähnliches sein. Die alternativ berechneten Teilbereiche, welche bestmöglich auf die Ortsdaten des ausgewählten Teilbereiches zutreffen, können in der Karte markiert sein, so dass der Nutzer nur noch einen dieser Bereiche auswählen muss. Darüber hinaus kann die Karte dazu verwendet werden, dass der Nutzer die Auswahl des gewünschten Teilbereiches verfeinert oder korrigiert. Dazu kann er beispielsweise die Ausdehnung und Lage des zu reinigenden beziehungsweise zu meidenden Gebietes in der Karte markieren.

Es empfiehlt sich, dass die in der Karte enthaltenen Ortsdaten dreidimensionale Informationen, insbesondere Informationen zu in dem Raum vorhandenen Hindernissen, aufweisen. Mit dieser Ausgestaltung kann der Nachteil überwunden werden, dass das Gerät bei dem Erstellen der Karte einen anderen Blickwinkel auf den Raum hat als der Nutzer bei der Erstellung des Fotos. Das Gerät hat üblicherweise eine Art bodennahe "Froschperspektive", während die Perspektive des Nutzers, und damit auch des Fotos, den "Vogelperspektiven" zuzurechnen ist. Darüber hinaus sind dem Gerät auch Teilbereiche des Raumes zugänglich, die für den Nutzer nicht einsehbar sind. Hierzu zählen beispielsweise Teilbereiche unter Schränken, Betten und dergleichen. Damit sich der Nutzer somit in der aus der Perspektive des Gerätes erstellten Karte besser zurechtfindet, können dreidimensionale Informationen über die Höhe von Hindernissen, beispielsweise von dem Gerät unterfahrene Objekte, dargestellt werden. Dazu bietet es sich an, die Hindernisse in die Gruppen "bodennah", d.h. nicht unterfahrbar, "niedrig' (unter Betten), "mittel" (unter Stühlen) und "hoch", (beispielsweise unter Tischen) einzuordnen.

Der Nutzer kann dem Gerät auf einfache Art und Weise mitteilen, welche Teilbereiche des Raumes gereinigt oder alternativ auch gemieden werden sollen. Der Nutzer erstellt dafür ein Foto des gewünschten Teilbereiches und sendet dieses an die Rechnereinheit, welche beispielsweise in dem selbsttätig verfahrbaren Gerät oder auch in einem externen Rechnersystem angeordnet sein kann. Diese Rechnereinheit vergleicht das Foto mit der innerhalb des Datenspeichers gespeicherten Karte des Raumes. Daraufhin kann mittels der Rechnereinheit eine Route zu dem gewünschten Teilbereich geplant werden, welche es dem Gerät ermöglicht, zu dem Teilbereich zu fahren oder den Teilbereich während seiner Verfahrtätigkeit zu meiden. Im Hinblick insbesondere auf eine Vermeidung kann der gewählte Teilbereich auch gespeichert werden, so dass dieser auch bei zukünftigen Reinigungs- oder Bearbeitungstätigkeiten gemieden werden kann. Das Gerät umfährt dann dementsprechend den ausgewählten Teilbereich. Insgesamt wird somit eine einfache und zeitgemäße Nutzer-/Geräte-Interaktion möglich, durch die der Nutzer dem Gerät mitteilen kann, welche Teilbereiche des Raumes besonders intensiv oder gar nicht gereinigt oder bearbeitet werden sollen. Als Befehl dient dafür einzig und allein ein Foto, welches der Nutzer von dem ausgewählten Teilbereich erstellt. Dadurch entfällt gemäß der Erfindung eine zusätzliche Fernbedienung zur Steuerung des Gerätes. Darüber hinaus ist es auch nicht erforderlich, dass der Nutzer den auszuwählenden Teilbereich in der in dem Datenspeicher hinterlegten Karte selbst sucht bzw. auffindet.

Im Rahmen der Erfindung ist es des Weiteren vorgesehen, dass der Nutzer das Foto mittels eines mobilen Endgerätes, insbesondere eines Mobiltelefons, erstellt. Alternativ zu einem Mobiltelefon, insbesondere einem Smartphone, kann das Verfahren auch mittels eines Tablet-PC, einer separaten Digitalkamera oder ähnlichem durchgeführt werden. Das Foto wird vorteilhaft über eine drahtlose Netzwerkverbindung mittels Funk, insbesondere mittels Wlan oder Bluetooth, an die Rechnereinheit übermittelt. Es ist jedoch auch möglich, dass zur Übertragung an die Rechnereinheit zuerst eine Speicherung der Ortsdaten des ausgewählten Teilbereiches in einem mobilen Datenspeicher des mobilen Endgerätes erfolgt, beispielsweise einer Speicherkarte, welche Speicherkarte sodann zur Datenübertragung mit der Rechnereinheit verbunden wird.

Es ist vorgesehen, dass das Gerät nach der Identifikation zu dem ausgewählten Teilbereich fährt und dort eine Reinigung oder Bearbeitung durchführt. Hierzu werden zunächst die Ortsdaten des ausgewählten Teilbereiches mit den in der Karte enthaltenen Ortsdaten verglichen. Für den Vergleich der Ortsdaten können unterschiedliche im Stand der Technik bekannte Verfahren genutzt werden.

Beispielsweise können lokale Bildmerkmale (Ortsdaten) innerhalb des von dem Nutzer erstellten Fotos detektiert werden und innerhalb der Karte gesucht werden. Dabei empfiehlt es sich, Bildmerkmale zu verwenden, welche tolerant gegenüber Änderungen der Kameraperspektive und/ oder -orientierung, des Blickwinkels oder Änderungen der Beleuchtungsbedingungen sind. Alternativ zu der Suche von lokalen Bildmerkmalen kann ebenfalls ein vorgegebenes Foto innerhalb einer Menge von bekannten Einzelbildern (üblicherweise innerhalb einer Bilddatenbank) gesucht werden, wobei das jeweils ähnlichste Bild oder die ähnlichsten Bilder als Treffer gefunden werden. Gemäß dem vorgeschlagenen Verfahren ist das zu suchende Bild das von dem Nutzer erstellte Foto des zu reinigenden beziehungsweise zu meidenden Teilbereiches. Die Bilddatenbank entspricht vorteilhaft der in dem Datenspeicher hinterlegten Karte des Raumes. Gemäß dem Verfahren wird mit Hilfe von Algorithmen der ausgewählte Teilbereich innerhalb der Karte gesucht und der Zielort oder zumindest eine Zielregion, die intensiv gereinigt oder von der Reinigung ausgeschlossen werden soll, ermittelt. Anschließend wird eine entsprechende Route dorthin berechnet. Alternativ werden die Ortsdaten des ausgewählten Teilbereiches innerhalb der Rechnereinheit gespeichert und bei der Reinigung oder Bearbeitung des Raumes von dem Gerät ausgespart.

Es wird vorgeschlagen, dass die Karte des Raumes innerhalb eines Datenspeichers des Gerätes gespeichert wird. Dies empfiehlt sich insbesondere, wenn das Gerät selbst die zur Erstellung der Karte relevanten Ortsdaten aufnimmt, während es gemäß einer üblichen Verfahrstrategie durch den Raum fährt. Dabei empfiehlt es sich, dass während der Aufnahme der Ortsdaten nicht gleichzeitig Reinigungs- oder Bearbeitungsaktivitäten durchgeführt werden. In einer weiteren Ausgestaltung ist es auch möglich, dass die Karte des Raumes nicht auf dem Gerät selbst, sondern beispielsweise in einer externen Datenbank oder in einem Datenspeicher des mobilen Endgerätes des Nutzers gespeichert wird.

Des Weiteren ist vorgesehen, dass die Ortsdaten des ausgewählten Teilbereiches und die in der Karte enthaltenen Ortsdaten mittels einer Rechnereinheit des Gerätes oder eines davon abweichenden Endgerätes des Nutzers, insbesondere eines Mobiltelefons, verglichen werden. In weiteren Ausgestaltungen ist es auch möglich, dass ein entsprechender Vergleich mittels einer Basisstation des Gerätes durchgeführt wird oder mittels vernetzter Haushaltsgeräte, wie sie beispielsweise im Rahmen von Multimediaanwendungen mittlerweile geläufig sind. Diesbezüglich könnte der Nutzer beispielsweise mittels einer separaten Digitalkamera, welche nicht in einem Mobiltelefon integriert ist, ein Foto des zu reinigenden Teilbereiches des Raumes erstellen. Dieses Foto könnte beispielsweise zuerst an das Gerät übermittelt werden, woraufhin das Gerät sowohl die in ihm gespeicherte Karte des Raumes als auch das Foto an einen Fernseher übermittelt, der die nötigen Rechenschritte im Rahmen der Identifikation des ausgewählten Teilbereiches durchführt. In diesem Zusammenhang ist es alternativ selbstverständlich auch möglich, dass die Digitalkamera oder das mobile Endgerät, beispielsweise ein Smartphone, das Foto direkt an den Fernseher übermittelt.

Gemäß einer weiteren Ausführungsform können die Ortsdaten des ausgewählten Teilbereiches auch auf einem externen Rechnersystem hinterlegt werden, auf welchem sich sowohl das Endgerät des Nutzers als auch das Gerät zur Reinigung oder Bearbeitung des Raumes anmelden können. Diese Lösung empfiehlt sich insbesondere, wenn ein leistungsstarkes Rechnersystem erforderlich ist, welches durch das mobile Endgerät des Nutzers oder das Gerät zur Reinigung oder Bearbeitung des Raumes nicht zur Verfügung gestellt werden kann.

Darüber hinaus wird im Rahmen der Erfindung vorgeschlagen, dass die Karte des Raumes mittels des Gerätes erstellt wird, wobei eine Kamera des Gerätes Einzelbilder von benachbarten Teilbereichen aufnimmt, die bei dem Erstellen der Karte aneinandergefügt werden. Die Karte wird somit aus den Ortsdaten benachbarter Teilbereiche des Raumes erstellt, wobei grundsätzlich unterschiedliche Verfahren zur Erstellung der Karte möglich sind. Es wird vorgeschlagen, die Karte als sogenannte "Mosaikkarte" zu erstellen, wobei die Methoden der sogenannten "simultanen Lokalisierung und Kartenerstellung" sowie der "visuellen Odometrie" verwendet werden können. Alternativ zu "Mosaikkarten" kann die Karte auch als sogenannte Panoramafotografie aus mehreren Einzelbildern erstellt werden.

Die vorgenannten "Mosaikkarten" werden im Stand der Technik insbesondere in Bereichen der Unterwasserrobotik zur Kartierung des Meeresbodens oder als Luftbild-Karten verwendet. Zum Erstellen der Karte werden beispielsweise bekannte Techniken der "simultanen Lokalisierung und Kartenerstellung (SLAM)" beziehungsweise der Panoramafotografie verwendet. Zur Lokalisation des aktuellen Ortes des Gerätes muss das aktuelle Bild mit der Mosaikkarte verglichen werden und eine Position geschätzt werden. Dazu werden bekannte Techniken basierend auf lokalen Bildmerkmalen beziehungsweise Algorithmen zur Bildersuche verwendet.

Die vorgenannten Methoden zur simultanen Lokalisierung und Kartenerstellung sind dadurch charakterisiert, dass sie das Gerät in der Karte lokalisieren, während die Karte aufgebaut, erweitert oder verbessert wird. Dazu werden Methoden der Sensordaten-Fusionierung angewandt. Verbesserungen an der Positionsschätzung beziehungsweise der Kartenkorrektur ergeben sich, wenn das Gerät an einen bereits bekannten Ort zurückkehrt. Die ebenfalls genannten Verfahren zur visuellen Odometrie versuchen, eine möglichst genaue Positionsschätzung des Gerätes zu berechnen. Eine Karte der Umgebung des Gerätes wird dabei oft als Beiprodukt erstellt. Den vorgenannten Verfahren ist gemeinsam, dass die von dem Gerät aufgenommenen Einzelbilder zu einer konsistenten, d.h. geometrisch korrekten, Mosaikkarte verknüpft werden und daraus die aktuelle Ortsinformation des Gerätes während des Kartenaufbaus geschätzt werden kann. Insbesondere, wenn sich zwischen den Bildern der aktuellen und der Vorgängeraufnahme Überschneidungen ergeben, können solche Verfahren die Qualität der Karte und der Positionsschätzung des Gerätes deutlich verbessern.

Ähnlich wie bei dem Aufbau von Mosaikkarten werden in der Panoramafotografie mehrere Einzelbilder zu einem hoch aufgelösten Panoramafoto zusammengesetzt. Zum Zusammensetzen der Bilder werden für Panoramafotos und Mosaikkarten gleichermaßen ähnliche Algorithmen verwendet. Im Gegensatz zu Mosaikkarten geben Panoramafotos jedoch nicht die Vogelperspektive der Grundebene wieder, sondern eine Perspektive, wie sie beispielsweise auch ein menschlicher Betrachter haben würde.

Alternativ zu den dargestellten bildgebenden Verfahren zur Erstellung der Karte ist es jedoch auch möglich, eine Karte aus Ortsdaten zu erstellen, die nicht mittels einer Kamera, sondern beispielsweise mittels Abstandssensoren (Ultraschallsensoren/Laser-Distanz-Sensoren) detektiert wurden.

Im Rahmen der Erfindung ist vorgesehen, dass zur Erstellung der Karte Ortsdaten des Raumes mittels des selbsttätig verfahrbaren Gerätes selbst aufgenommen werden. Somit dient das selbsttätig verfahrbare Gerät nicht alleine der Reinigung oder Bearbeitung des Raumes, sondern vielmehr auch zur Erstellung der Karte. Diese Karte kann grundsätzlich auch anderen Geräten zur Verfügung gestellt werden, so dass der betreffende Raum nicht auf gleiche Art und Weise noch einmal vermessen müssten.

Neben den Verfahren zur Reinigung oder Bearbeitung eines Raumes schlägt die Erfindung auch ein selbsttätig verfahrbares Gerät zur Reinigung oder Bearbeitung eines Raumes vor, wobei das selbsttätig verfahrbare Gerät einen Datenspeicher zur Speicherung einer Karte des Raumes und eine mit dem Datenspeicher verbundene Rechnereinheit aufweist, die dazu eingerichtet ist, ein an die Rechnereinheit übermitteltes Foto eines Teilbereiches des Raumes zur Identifikation des Teilbereiches mit der gespeicherten Karte zu vergleichen.

Im Folgenden wird die Erfindung anhand eines Ausführungsbeispiels näher erläutert. Es zeigen:
- Fig. 1: einen Teilbereich eines Raumes mit einem selbsttätig verfahrbaren Gerät und einem mobilen Endgerät;
- Fig. 2: ein perspektivisch verzerrtes Foto, mit dem mobilem Endgerät aufgenommen;
- Fig. 3: rektifiziertes Foto gemäß Figur 2;
- Fig. 4: ein selbsttätig verfahrbares Gerät mit Kamera;
- Fig. 5: das Gerät gemäß Figur 4 bei der Ermittlung der Ortsdaten eines Hindernisses.

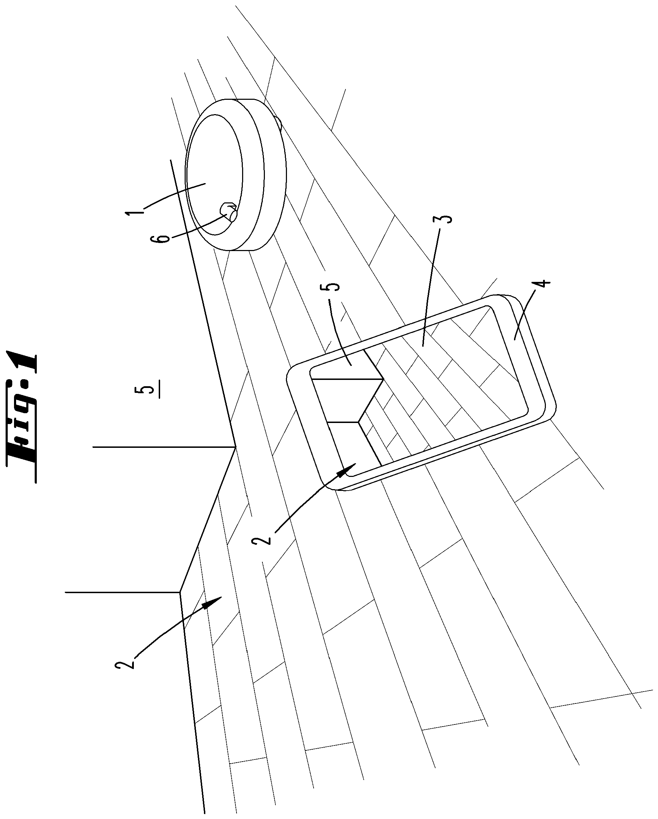

Die in Figur 1 dargestellte Situation zeigt ein selbsttätig verfahrbares Gerät 1, hier beispielsweise ein Saugroboter, auf einer zu reinigenden Bodenfläche eines Raumes. Das Gerät 1 verfügt über eine Kamera 6, welche in Hauptverfahrrichtung des Gerätes 1 angeordnet ist, so dass der vor dem Gerät 1 liegende Bodenbereich detektiert werden kann. Der dargestellte Raumausschnitt umfasst einen Teilbereich 2 eines Raumes mit einem Hindernis 5, nämlich einer Wand. Das Hindernis 5 kann jedoch auch jeder andere Gegenstand sein, welcher für das Gerät 1 nicht überwindbar ist, beispielsweise Betten, Schränke und dergleichen, welche einen Abstand zum Boden aufweisen, der geringer ist als die Höhe des Gerätes 1, so dass das Gerät 1 nicht unter diese Hindernisse 5 fahren kann. Ein Nutzer (nicht dargestellt) verfügt über ein mobiles Endgerät 4, hier beispielsweise als Smartphone dargestellt, welches über eine Kamera (nicht dargestellt) und entsprechende Software verfügt, um ein Foto 3 von einem Teilbereich 2 des Raumes zu erstellen. Das von dem mobilen Endgerät 4 des Nutzers aufgenommene Foto 3 kann beispielsweise auf dem Endgerät 4 selbst angezeigt werden, wie dies in der Figur 1 dargestellt ist.

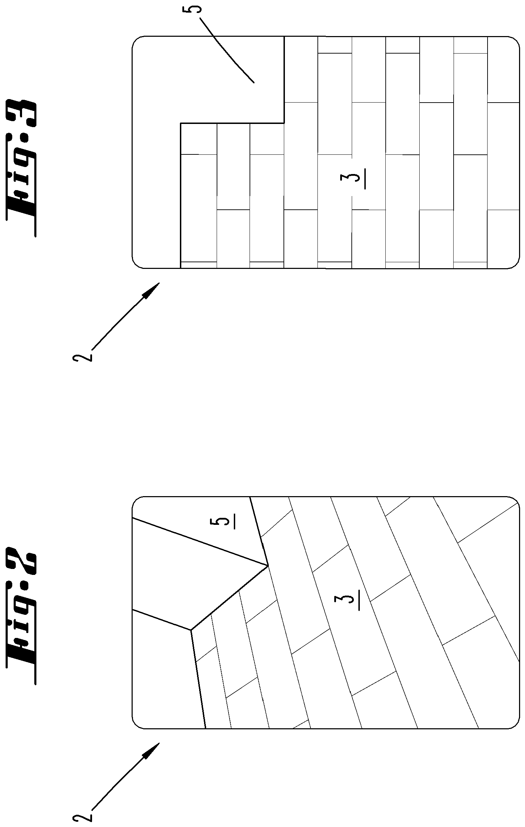

Figur 2 zeigt das von dem Endgerät 4 aufgenommene Foto 3 in einer unbearbeiteten Version. Erkennbar ist der dargestellte Fußboden perspektivisch verzerrt, so dass eine weitere Bildbearbeitung notwendig ist.

Figur 3 zeigt den Teilbereich 2 gemäß Figur 2, jedoch in einer rektifizierten Version. Das Foto 3 ist durch die Rektifizierung von perspektivischen Verzerrungen und Abbildungsfehlern bereinigt, so dass sich eine verzerrungsfreie und maßstabsgetreue Ansicht des Teilbereiches 2 ergibt. Das so bearbeitete Foto 3 entspricht einer Ansicht des Teilbereiches 2 aus einer senkrecht zu dem Teilbereich 2 verlaufenden Blickrichtung.

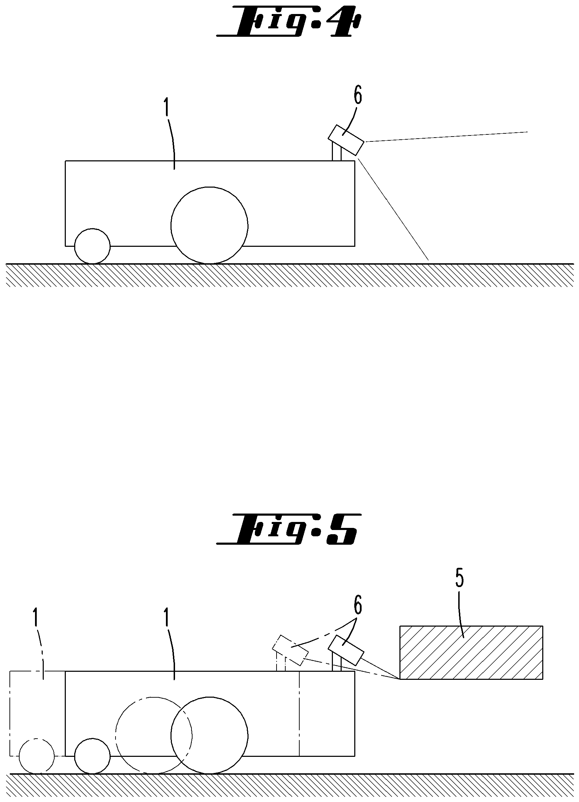

Figur 4 zeigt das selbsttätig verfahrbare Gerät 1 in einer skizzierten Seitenansicht. Bei dem Gerät 1 kann es sich grundsätzlich um jede Art von Gerät 1 zur Reinigung oder Bearbeitung eines Raumes handeln. Hier wird beispielsweise ein Saugroboter angenommen. Das Gerät 1 verfügt über eine Kamera 6, mit deren Hilfe die Umgebung des Gerätes 1 fotografiert oder gefilmt werden kann, so dass beispielsweise aufeinander folgende Teilbereiche 2 eines Raumes zur Kartenerstellung aufgenommen werden können.

Figur 5 zeigt eine Situation, in welcher sich das Gerät 1 einem Hindernis 5 annähert. Es sind zwei verschiedene, zeitlich aufeinanderfolgende Positionen des Gerätes 1 vor dem Hindernis 5 dargestellt. Diese beiden Positionen ergeben sich zeitlich versetzt bei dem Annähern des Gerätes 1 an das Hindernis 5. In der gestrichelten Variante ist das Gerät 1 zu einem früheren Zeitpunkt dargestellt als gemäß der Variante mit durchgezogener Linie. Das Hindernis 5 kann beispielsweise die Bodenfläche eines Regals sein, welche durch die Höhe der Füße des Regals von dem Fußboden beabstandet ist. Das Gerät 1 kann nun die Höhe des Hindernisses 5 überprüfen und feststellen, ob das Gerät 1 geeignet ist, unter dem Hindernis 5 hindurchzufahren. Das Gerät 1 fährt in zeitlicher Abfolge von der gestrichelt dargestellten Position in die mit durchgezogener Linie dargestellte Position. Dabei ist das Hindernis 5 unter verschiedenen Winkeln detektierbar. Aus den Winkeln und der von dem Gerät 1 zurückgelegten Strecke lässt sich der Abstand des Hindernisses 5 zu der Kamera 6 berechnen. Daraus lässt sich wiederum die Höhe des Hindernisses 5 relativ zu der Kamera 6 bestimmen, so dass darauf geschlossen werden kann, ob das Gerät 1 unter dem Hindernis 5 hindurchfahren kann.

Obwohl in den Figuren lediglich ein Gerät 1 mit einer einzelnen (also monokularen) Kamera beschrieben ist, können auch andere Kamerasysteme eingesetzt werden. Hierzu sind beispielsweise omnidirektionale Kamerasysteme mit einem sehr großen horizontalen Sichtfeld, typischerweise 360° Rundumsicht, oder Stereo-Kamerasysteme mit zwei oder mehr Kameras einsetzbar.

Ein besonders einfaches Kamerasystem lässt sich durch eine senkrecht auf den Fußboden gerichtete Kamera 6 erzielen. Die Kamera 6 bildet dabei den Fußboden aus einer senkrechten Blickrichtung ab, wodurch der Schritt der Bildbearbeitung entfällt. Eine solche Kamera 6 lässt sich leicht gegen Umgebungseinflüsse schützen, so dass sich beispielsweise konstante Beleuchtungsbedingungen erreichen lassen. Konstante Beleuchtungsbedingungen vereinfachen die Erstellung von Karten aus einer Vielzahl von Einzelbildern der Kamera 6. Da ein solches Kamerasystem jedoch nur den Fußboden sieht, kann es umliegende Hindernisse 5 nicht erkennen. Die erfindungsgemäße Einteilung der Hindernisse 5 in Höhenstufen würde somit entfallen.

Obwohl bisher ausschließlich auf bildgebende Kameras 6 abgestellt wurde, sind auch andere Sensoren im Rahmen der Erfindung anwendbar, beispielsweise Ultraschallsensoren oder Laserdistanzsensoren.

Im Folgenden werden die einzelnen Verfahrensschritte des vorgeschlagenen Verfahrens zur Reinigung oder Bearbeitung eines Raumes mittels des selbsttätig verfahrbaren Gerätes 1 detailliert dargestellt.

Zur Durchführung des Verfahrens ist beispielsweise ein Gerät 1 geeignet, das mit einem On-Bord-Computer ausgestattet ist, auf dem die notwendigen Berechnungen für den Vergleich der Ortsdaten des ausgewählten Teilbereiches 2 mit den in der Karte enthaltenen Ortsdaten zur Identifikation des Teilbereiches 2 durchgeführt werden können. Das mobile Endgerät 4 kann beispielsweise ein Smartphone, ein Tablett-PC oder ähnliches sein. Die Kommunikation zwischen dem Gerät 1 und dem mobilen Endgerät 4 erfolgt vorteilhaft mittels einer drahtlosen Netzwerkverbindung, beispielsweise Funkverbindung (Wlan oder Bluetooth, etc.). Dabei können das selbsttätig verfahrbare Gerät 1 und das mobile Endgerät 4 des Nutzers entweder direkt miteinander kommunizieren (peer to peer Verbindung) oder nach Anmelden des Gerätes 1 und des Endgerätes 4 in einem Netzwerk, d.h. auf einem externen Rechnersystem.

Damit ein Vergleich der Ortsdaten des ausgewählten Teilbereiches 2 mit bekannten Ortsdaten des Raumes überhaupt möglich ist, ist zuerst eine Karte von dem Raum zu erstellen. Besonders vorteilhaft ist die Karte eine Mosaikkarte, welche aus mehreren Einzelbildern zusammengesetzt ist und den Fußboden des Raumes aus der Vogelperspektive betrachtet. Während der Aufnahme der Einzelbilder, die später zu der Karte zusammengesetzt werden, empfiehlt es sich, dass die Fahrt des Gerätes 1 ohne gleichzeitige Reinigung/Bearbeitung des Raumes erfolgt, um beispielsweise im Falle eines Wischgerätes Beschädigungen am Untergrund zu vermeiden. In diesem Zusammenhang kann der Nutzer dem Gerät 1 beispielsweise mitteilen, welche Teilbereiche 2 des Raumes nicht feucht gereinigt werden dürfen, da diese beispielsweise mit Parkett belegt sind. Die Erstellung der Karte lässt sich in mehrere Schritte unterteilen, welche im Folgenden detailliert dargestellt werden.

Rektifizierung der Einzelbilder: Dadurch, dass die Kamera 6 an dem Gerät 1 in Fahrtrichtung nach vorne gerichtet ist, wird der mittels der Kamera 6 aufgenommene Teilbereich 2 perspektivisch verzerrt und unterliegt zudem Abbildungsfehlern, welche durch die Art der eingesetzten Kamera 6 verursacht werden. Durch die Rektifizierung werden diese Verzerrungen und Abbildungsfehler eliminiert, so dass sich eine verzerrungsfreie und maßstabsgetreue Ansicht der Teilbereiche 2 des Raumes ergibt. Die zur Rektifizierung benötigten Bildbearbeitungsschritte sind im Stand der Technik bekannt und werden deswegen hier nicht näher erläutert. Bei einem Vergleich der Teilbereiche 2 gemäß den Figuren 2 und 3 erkennt man, dass die dort dargestellten Fliesen perspektivisch verzerrt sind, so dass sich eine nicht rechtwinklige Anordnung von Fußboden und Wand (Hindernis 5) ergibt. Das rektifizierte Foto 3 gemäß Figur 3 zeigt deutlich, dass die Fliesen nach der Rektifizierung parallel zueinander sind und einen rechten Winkel zu der Wand (Hindernis 5) aufweisen.

Zusammenfügen der Einzelbilder zu einer Karte: Die Karte wird aus den Einzelbildern zusammengefügt, woraus sich auch der Name "Mosaikkarte" ableitet. Falls zu Beginn der Kartenerstellung noch keine Karte existiert, wird das erste aufgenommene Einzelbild als Ausgangspunkt für die Anfügung weiterer Einzelbilder genommen. Das Anfügen eines aktuellen Einzelbildes an eine bestehende Karte bezeichnet man als Registrierung. Algorithmen zur Bildregistrierung arbeiten üblicherweise in zwei Stufen. Zuerst wird bestimmt, an welcher Stelle und in welcher Orientierung das aktuelle Einzelbild angefügt werden soll. Dazu gibt es zwei mögliche Ansätze: Häufig werden in der bestehenden Karte und in dem einzufügenden Einzelbild lokale Bildmerkmale detektiert und Korrespondenzen zwischen den Merkmalen beider Einzelbilder berechnet. Aus der Analyse der Korrespondenzen lassen sich dann wiederum Lage und Orientierung zum Einfügen des aktuellen Einzelbildes errechnen. Zur Eliminierung falscher (beziehungsweise unplausibler) Korrespondenzen kann eine Schätzung der Gerätebewegung, d.h. Translation und Rotation, zwischen dem zuletzt eingefügten und dem aktuellen Einzelbild verwendet werden. Alternativ dazu können die Lage und Orientierung durch einen Suchprozess und Bildvergleiche bestimmt werden: Das aktuelle Einzelbild wird an mehreren möglichen Positionen und in mehreren möglichen Orientierungen mit der bestehenden Karte verglichen. Diejenige Kombination aus Position und Orientierung, die zu der besten Übereinstimmung geführt hat, wird dann als Ergebnis der Suche verwendet. Der Suchbereich kann eingeschränkt werden, wenn eine Schätzung der Gerätebewegung zwischen dem zuletzt eingefügten und dem aktuellen Einzelbild verwendet wird.

Im zweiten Schritt wird das neue Einzelbild an der berechneten Position und in der berechneten Orientierung in die bestehende Karte eingefügt. Es kann auch eine Anpassung der Bildhelligkeit des einzufügenden Einzelbildes erfolgen, so dass die resultierende Karte möglichst einheitlich hell erscheint.

Während das selbsttätig verfahrbare Gerät 1 durch den zu kartierenden Raum fährt, werden entlang des Verfahrweges in regelmäßigen Abständen Einzelbilder aufgenommen. Das aktuelle aufgenommene Einzelbild wird dabei wie zuvor beschrieben rektifiziert und in die Karte eingefügt. Dazu ist ein gewisser Überlapp des aktuellen Einzelbildes mit der bereits bestehenden Karte vorteilhaft. Durch die Registrierung des aktuellen Einzelbildes an der bestehenden Karte lässt sich eine Schätzung der Geräteposition zum Zeitpunkt der Bildaufnahme des aktuellen Einzelbildes berechnen. Diese kann entweder als alleinige Positionsschätzung dienen oder sie kann mit Positionsschätzungen, die aus anderen Sensorinformationen (z.B. Laserdistanzsensor) abgeleitet wurden, fusioniert werden.

Integration einer Information über die Höhe eines Hindernisses 5: Die aus den Einzelbildern erstellte Karte enthält ausschließlich die rektifizierte Sicht des Gerätes 1 auf den Fußboden. Da das Gerät 1 den Fußboden jedoch auch in Teilbereiche 2 kartiert, die für einen Menschen nicht einsehbar sind, z.B. unter Tischen und Betten, kann es dem Nutzer schwer fallen, sich in der Mosaikkarte zurechtzufinden. Daher ist es sinnvoll, zusätzliche Informationen in die Karte einzufügen, die dem Nutzer die Benutzung der Karte erleichtern. Dies könnte beispielsweise zusätzliche Höheninformationen über unterfahrene Hindernisse 5 oder über bodennahe Hindernisse 5, die nicht unterfahren werden können, beinhalten. Die Höhe von unterfahrenen Hindernissen 5 lässt sich beispielsweise durch Triangulation aus zwei Einzelbildern berechnen, wenn die Bewegung des Gerätes 1 zwischen den Orten, an dem die Einzelbilder aufgenommen wurden, bekannt ist. Dies ist in Figur 5 dargestellt. Zur Vereinfachung der Kartendarstellung für den Nutzer kann die so ermittelte Höhe des Hindernisses 5 einer vorgegebenen Kategorie zugeordnet werden, beispielsweise "bodennah" (nicht unterfahrbar), "niedrig" (unter Betten oder Schränken), "mittel" (unter Stühlen) oder "hoch" (unter Tischen). Die Höhenangaben können in der Karte beispielsweise farbig definiert sein. Die so erstellte Karte kann beispielsweise in dem Gerät 1 selbst gespeichert werden, alternativ ist jedoch auch eine Speicherung in dem mobilen Endgerät 4 des Nutzers möglich.

Lokalisation des Fotos 3 des Teilbereiches 2 in der Karte: Um dem Gerät 1 anzuzeigen, welches Gebiet des Raumes gezielt gereinigt/bearbeitet werden oder in weiteren Reinigungsabläufen/Bearbeitungsabläufen vermieden werden soll, macht der Nutzer mit seinem mobilen Endgerät 4 ein Foto 3 des gewünschten Teilbereiches 2. Das Foto 3 wird beispielsweise über eine Funkverbindung an das Gerät 1 übermittelt. Dort wird es mit der hinterlegten Karte des Raumes verglichen und es wird berechnet, welcher Teilbereich 2 des Raumes auf dem Foto 3 zu sehen ist. Im Idealfall kann ein Teilbereich 2 des Raumes eindeutig bestimmt werden. Es kann jedoch auch zu Mehrdeutigkeiten kommen, die der Nutzer dann durch eigenes Zutun beseitigen muss, indem er beispielsweise manuell eine Auswahl zwischen mehreren möglichen Teilbereichen 2 trifft oder die Ortsdaten des von ihm ausgewählten Teilbereiches 2 konkretisiert.

Der Vergleich der Ortsdaten des ausgewählten Teilbereiches 2 mit den in der Karte enthaltenen Ortsdaten zur Identifikation des Teilbereiches 2 erfolgt ähnlich wie die zuvor dargestellte Bildregistrierung. Die Positionsbestimmung beruht dabei beispielsweise auf der Berechnung von Übereinstimmungen zwischen Ortsdaten, wie beispielsweise lokalen Bildmerkmalen, beziehungsweise auf einem Suchprozess und Vergleich.

Im Rahmen des Vergleiches können beispielsweise die Ortsdaten, insbesondere lokale Bildmerkmale, in dem Foto 3 und der Karte verglichen werden. Die Ortsdaten der Karte sind bekannt beziehungsweise müssen nach Erstellung der Karte einmalig berechnet werden. Da beispielsweise die lokalen Bildmerkmale als Ortsdaten in der Regel tolerant gegen Skalierungsänderungen (also Größe des Bildmerkmals im Bild), Rotationen des Blickwinkels und teilweise tolerant gegen perspektivische Verzerrungen sind, eignet sich diese Vergleichsmethode besonders.

Zur Identifikation des durch den Nutzer ausgewählten Teilbereiches 2 innerhalb der Karte wird das durch den Nutzer aufgenommene Foto 3 an verschiedenen Positionen, mit unterschiedlichen Orientierungen und auch mit mehreren perspektivischen Verzerrungen mit der Karte verglichen. Die Position in der Karte, für welche die größte Übereinstimmung erreicht ist, wird dann als Position des gewählten Teilbereiches 2 bestimmt.

Beseitigung von Mehrdeutigkeiten: Im Idealfall kann das durch den Nutzer aufgenommene Foto 3 eindeutig als ein bestimmter Teilbereich 2 innerhalb der Karte aufgefunden werden. Je nach der Perspektive oder dem Abstand der Kamera 6 des selbsttätig verfahrbaren Gerätes 1 zum Untergrund kann eine eindeutige Zuordnung des Fotos 3 des Nutzers in der durch das selbsttätig verfahrbare Gerät 1 aufgenommenen Karte nicht erfolgen. In diesem Fall können gemäß dem Verfahren mehrere mögliche Teilbereiche 2 berechnet werden, die dem Nutzer vorgeschlagen werden. Dazu wird die Karte (gegebenenfalls zusammen mit den Höhenkategorien) auf dem mobilen Endgerät 4 des Nutzers dargestellt. Diese Darstellung kann beispielsweise verschiebbar, drehbar, vergrößerbar, verkleinerbar etc. sein. Die möglichen Teilbereiche 2 sind in der Karte markiert und der Nutzer kann einen oder auch mehrere dieser Teilbereiche 2 auswählen. Alternativ dazu kann die Kartendarstellung auf dem mobilen Endgerät 4 des Nutzers auch dazu verwendet werden, dass der Nutzer das gewünschte Gebiet verfeinern oder korrigieren kann. Dazu kann der Nutzer beispielsweise die Ortsdaten des ausgewählten Teilbereiches 2 konkretisieren. Dies betrifft beispielsweise die Ausdehnung und Lage des zu reinigenden Teilbereiches 2 in der Karte. Der Nutzer kann dann einem Vorschlag zustimmen oder nach seinen Wünschen konkretisieren.

Mitteilung eines Nutzerbefehls zu dem ausgewählten Teilbereich 2: Je nach der durch den Nutzer gewünschten Reinigungs- oder Bearbeitungsaktion des Gerätes 1 muss das Gerät 1 unterschiedlich mit dem gewählten Teilbereich 2 verfahren. Beispielsweise kann es vorgesehen sein, dass das Gerät 1 zu dem ausgewählten Teilbereich 2 fährt und dort eine Reinigung oder Bearbeitung durchführt. Alternativ kann es auch vorgesehen sein, dass der ausgewählte Teilbereich 2 bei der Reinigung oder Bearbeitung des Raumes von dem Gerät 1 ausgespart werden soll. Im erstgenannten Fall fährt das Gerät 1 unmittelbar nach der Identifikation des durch den Nutzer gewählten Teilbereiches 2 zu dem entsprechenden Teilbereich 2 innerhalb des Raumes. Dazu plant das Gerät 1 eine Route von seiner aktuellen Position zu dem gewünschten Teilbereich 2 und fährt diese Route autonom ab. Ist der gewünschte Teilbereich 2 erreicht, beginnt das Gerät 1 mit einer Reinigung oder Bearbeitung gemäß der festgelegten Ausdehnung des Teilbereiches 2. Dabei können unterschiedliche Fahrstrategien zur Anwendung kommen, beispielsweise kann das Gerät 1 den zu reinigenden/bearbeitenden Teilbereich 2 mäanderförmig befahren.

Soll der ausgewählte Teilbereich 2 bei der Reinigung oder Bearbeitung des Raumes vom Gerät 1 ausgespart werden, muss die Position und Ausdehnung des Teilbereiches 2 gespeichert werden. Bei nachfolgenden Reinigungen oder Bearbeitungen muss das Gerät 1 dann seine Fahrstrategie so anpassen, dass der ausgewählte Teilbereich 2 nicht befahren beziehungsweise gereinigt oder bearbeitet wird.

### Bezugszeichenliste:

- 1: Gerät
- 2: Teilbereich
- 3: Foto
- 4: Endgerät
- 5: Hindernis
- 6: Kamera

## Patentansprüche

1. Verfahren zur Reinigung oder Bearbeitung eines Raumes mittels eines selbsttätig verfahrbaren Gerätes (1), mit den Verfahrensschritten:
- Erstellen einer Karte des Raumes,
- Speichern der Karte des Raumes innerhalb eines Datenspeichers,
- Auswählen eines Teilbereiches (2) des Raumes durch Erstellen eines Fotos des Teilbereiches (2) durch einen Nutzer,
- Übermitteln der Ortsdaten des ausgewählten Teilbereiches (2) an eine mit dem Datenspeicher verbundene Rechnereinheit,
- Vergleichen der Ortsdaten des ausgewählten Teilbereiches (2) mit den in der Karte enthaltenen Ortsdaten zur Identifikation des Teilbereiches (2) mittels der Rechnereinheit, und
- Reinigen oder Bearbeiten des Raumes unter Berücksichtigung eines Nutzerbefehls zu dem ausgewählten Teilbereich (2),
**dadurch gekennzeichnet,**
**dass** der Nutzer bei nicht eindeutiger Identifikation des Teilbereiches (2) manuell eine Auswahl zwischen mehreren möglichen Teilbereichen (2) trifft und/ oder die Ortsdaten des ausgewählten Teilbereiches (2) konkretisiert.

2. Verfahren nach Anspruch 1, **dadurch gekennzeichnet, dass** der Nutzer das Foto (3) mittels eines mobilen Endgerätes (4), insbesondere eines Mobiltelefons, erstellt.

3. Verfahren nach Anspruch 1 oder 2, **dadurch gekennzeichnet, dass** das Gerät (1) nach der Identifikation zu dem ausgewählten Teilbereich (2) fährt und dort eine Reinigung oder Bearbeitung durchführt.

4. Verfahren nach Anspruch 1 oder 2, **dadurch gekennzeichnet, dass** der ausgewählte Teilbereich (2) bei der Reinigung oder Bearbeitung des Raumes von dem Gerät (1) ausgespart wird.

5. Verfahren nach einem der vorhergehenden Ansprüche, **dadurch gekennzeichnet, dass** die Karte des Raumes innerhalb eines Datenspeichers des Gerätes (1) gespeichert wird.

6. Verfahren nach einem der vorhergehenden Ansprüche, **dadurch gekennzeichnet, dass** die Ortsdaten des ausgewählten Teilbereiches (2) und die in der Karte enthaltenen Ortsdaten mittels einer Rechnereinheit des Gerätes (1) oder eines davon abweichenden Endgerätes (4) des Nutzers, insbesondere eines Mobiltelefons, verglichen werden.

7. Verfahren nach einem der vorhergehenden Ansprüche, **dadurch gekennzeichnet, dass** die in der Karte enthaltenen Ortsdaten dreidimensionale Informationen, insbesondere Informationen zu in dem Raum vorhandenen Hindernissen (5), aufweisen.

8. Verfahren nach einem der vorhergehenden Ansprüche, **dadurch gekennzeichnet, dass** die Karte des Raumes mittels des Gerätes (1) erstellt wird, wobei eine Kamera (6) des Gerätes (1) Einzelbilder von benachbarten Teilbereichen (2) aufnimmt, die bei dem Erstellen der Karte aneinandergefügt werden.

9. Selbsttätig verfahrbares Gerät (1) zur Reinigung oder Bearbeitung eines Raumes, insbesondere zur Durchführung des Verfahrens nach einem der Ansprüche 1 bis 8, wobei das selbsttätig verfahrbare Gerät (1) einen Datenspeicher zur Speicherung einer Karte des Raumes und eine mit dem Datenspeicher verbundene Rechnereinheit aufweist und die Rechnereinheit eingerichtet ist, ein an die Rechnereinheit übermitteltes Foto eines Teilbereiches (2) des Raumes zur Identifikation des Teilbereiches (2) mit der gespeicherten Karte zu vergleichen, **dadurch gekennzeichnet, dass** das Gerät so eingerichtet ist, dass es dem Nutzer ermöglicht ist, bei nicht eindeutiger Identifikation des Teilbereiches (2) manuell eine Auswahl zwischen mehreren möglichen Teilbereichen (2) zu treffen und/ oder die Ortsdaten des ausgewählten Teilbereiches (2) zu konkretisieren.

## Claims

1. A method for cleaning or processing a room by means of an autonomously mobile device (1), including the method steps:
- Creating a map of the room,
- Storing the map of the room in a data memory,
- Selection of a subarea (2) of the room by a user by taking of a photo of the subarea (2),
- Transmitting the location data for the selected subarea (2) to a processing unit connected to the data memory,
- Comparing the location data for the selected subarea (2) with the location data contained in the map for identification of the subarea (2) by the processing unit, and
- Cleaning or processing the room taking into account a user command with regard to the selected subarea (2),
**characterized in that**
if the subarea (2) is not identified unambiguously, the user makes manually a selection between several possible subareas (2) and/or specifies the location data of the selected subarea (2) more precisely.

2. The method according to claim 1, **characterized in that** the user takes the photograph (3) using a mobile end device (4), particularly a mobile telephone.

3. The method according to claim 1 or 2, **characterized in that** following identification the device (1) travels to the selected subarea (2) and carries out a cleaning or processing activity.

4. The method according to claim 1 or 2, **characterized in that** the selected subarea (2) is excluded from the room cleaning or processing activities by the device (1).

5. The method according to any one of the preceding claims, **characterized in that** the map of the room is stored in a data memory of the device (1).

6. The method according to any one of the preceding claims, **characterized in that** the location data of the selected subarea (2) and the located data contained in the map are compared by a processing unit in the device (1) or by a different end device (4) of the user, particularly a mobile telephone.

7. The method according to any one of the preceding claims, **characterized in that** the location data contained in the map includes three-dimensional information, particularly information about the obstacles (5) present in the room.

8. The method according to any one of the preceding claims, **characterized in that** the map of the room is created by means of the device (1), wherein a camera (6) of the device (1) takes single images of adjacent subareas (2), which are then joined to each other during compilation of the map.

9. An autonomously mobile device (1) for cleaning or processing a room, particularly for carrying out the process in accordance with any one of claims 1 to 8, wherein the autonomously mobile device (1) has a data memory for storing a map of the room and a processing unit connect to the data memory and the computer unit is configured to compare a photo of a subarea (2) of the room, which is transmitted to the computer unit, with the stored map for identification of the subarea (2), **characterized in that** the device is configured such that it is possible for the user, if the subarea (2) is not identified unambiguously, to choose manually between several possible subareas (2) and/or to specify the location data of the selected subarea (2) more precisely.

## Revendications

1. Procédé de nettoyage ou de traitement d'une pièce au moyen d'un appareil à déplacement automatique (1), comprenant les étapes de :
- établir une carte de la pièce,
- stocker la carte de la pièce dans une mémoire de données,
- sélectionner une zone partielle de la pièce (2) par réalisation d'une photo de la zone partielle (2) par un utilisateur,
- transmettre les données de localisation de la zone partielle sélectionnée (2) à une unité de traitement reliée à la mémoire de données,
- comparer les données de localisation de la zone partielle sélectionnée (2) avec les données de localisation contenues dans la carte pour identification de la zone partielle (2) au moyen de l'unité de traitement, et
- nettoyer ou traiter la pièce en prenant en compte une commande utilisateur concernant la zone partielle sélectionnée (2),
**caractérisé en ce que**,
en l'absence d'identification univoque de la zone partielle (2), l'utilisateur manuellement opère une sélection parmi plusieurs zones partielles possibles (2) et/ou spécifie les données de localisation de la zone partielle sélectionnée (2).

2. Procédé selon la revendication 1, **caractérisé en ce que** l'utilisateur réalise la photo (3) au moyen d'un terminal mobile (4), en particulier un téléphone mobile.

3. Procédé selon la revendication 1 ou 2, **caractérisé en ce que**, après l'identification, l'appareil (1) se déplace à la zone partielle sélectionnée (2) et y réalise un nettoyage ou traitement.

4. Procédé selon la revendication 1 ou 2, **caractérisé en ce que** la zone partielle sélectionnée (2) est omise par l'appareil (1) lors du nettoyage ou traitement de la pièce.

5. Procédé selon l'une des revendications précédentes, **caractérisé en ce que** la carte de la pièce est stockée dans une mémoire de données de l'appareil (1).

6. Procédé selon l'une des revendications précédentes, **caractérisé en ce que** les données de localisation de la zone partielle sélectionnée (2) et les données de localisation contenues dans la carte sont comparées au moyen d'une unité de traitement de l'appareil (1) ou d'un terminal (4) de l'utilisateur qui en est distinct, en particulier un téléphone mobile.

7. Procédé selon l'une des revendications précédentes, **caractérisé en ce que** les données de localisation contenues dans la carte comprennent des informations tridimensionnelles, en particulier des informations concernant des obstacles (5) existants dans la pièce.

8. Procédé selon l'une des revendications précédentes, **caractérisé en ce que** la carte de la pièce est établie au moyen de l'appareil (1), dans lequel une caméra ou appareil photo (6) de l'appareil (1) prend des images individuelles de zones partielles voisines (2) lesquelles sont disposées côte-à-côte lors de l'établissement de la carte.

9. Appareil à déplacement automatique (1) pour le nettoyage ou traitement d'une pièce, en particulier pour le mise en oeuvre du procédé selon l'une des revendications 1 à 8, dans lequel l'appareil à déplacement automatique (1) comprend une mémoire de données pour stocker une carte de la pièce et une unité de traitement reliée à la mémoire de données et l'unité de traitement est configurée pour comparer une photo d'une zone partielle (2) de la pièce transmise à l'unité de traitement avec la carte stockée aux fins d'identification de la zone partielle (2), **caractérisé en ce que** l'appareil est agencé de manière à ce que, en l'absence d'identification univoque de la zone partielle (2), il soit donné la possibilité à l'utilisateur de manuellement opérer une sélection parmi plusieurs zones partielles possibles (2) et/ou spécifier les données de localisation de la zone partielle sélectionnée (2).
